# EUROPÄISCHE PATENTSCHRIFT

(11) **EP 0 952 503 B1**
(45) Veröffentlichungstag und Bekanntmachung des Hinweises auf die Patenterteilung: **04.02.2004**
(21) Anmeldenummer: 99107812.2
(22) Anmeldetag: 20.04.1999
(51) Int. Cl.: G05B 19/042

(54) **Hybrid-Programmsteuereinrichtung, insbesondere für eine Waschmaschine**
Hybrid programming device, in particular for a washing machine
Dipositif de programmation hybride, en particulier pour un lave-linge

(30) Priorität: 24.04.1998 DE 19818376
(43) Veröffentlichungstag der Anmeldung: 27.10.1999
(73) Patentinhaber: Diehl AKO Stiftung & Co. KG, 88239 Wangen im Allgäu (DE)
(72) Erfinder: Siebachmeyer, Fritz, 88099 Neukirch (DE); Menniger, Ralf, 88239 Wangen/Allgäu (DE)
(74) Vertreter: Diehl Patentabteilung

(56) Entgegenhaltungen:
- EP-A- 0 504 052
- EP-A- 0 687 761
- EP-A- 0 693 720
- DE-A- 2 736 384
- DE-A- 3 303 992
- DE-A- 4 134 916

## Beschreibung

Die Erfindung betrifft eine Hybrid-Programmsteuerung gemäß dem Oberbegriff des Anspruches 1.

Eine derartige Programmsteuerung ist aus der EP 0 687 761 A1 als elektromechanische Programmsteuerung mit digitalem Mikrocontroller für die Programmauswahl und -abarbeitung bei einer Waschmaschine bekannt. Dort erfolgt die Auswahl aus dem Programmangebot elektromechanisch, während innerhalb des ausgewählten Programms der Mikrocontroller den Motorbetrieb steuert, nämlich nach Maßgabe von Steuer-Codes, die vom elektromechanischen Programmgeber gerade an den Mikrocontroller geliefert werden. Dabei ist wenigstens ein Steuerelement vorgesehen, mittels dessen die Codes modifiziert werden können, die vom elektromechanischen Programmgeber an den Mikrocontroller übermittelt werden, um die Anzahl der verfügbaren Waschprogramme zu vergrößern.

Andere Hybrid-Programmsteuerung für Waschmaschinen sind in der EP 0 693 720 A1 oder in der EP 0 695 982 A1 beschrieben. Danach wird direkt durch von Nockenscheiben einer Programmtrommel gesteuerte Schaltkontakte ein Teil der Aggregate der Waschmaschine angesteuert, speziell solche Aggregate, die nur ein- und ausgeschaltet werden müssen (wie eine Ablaufpumpe, ein Zulaufventil oder dergleichen), so dass für diese Schaltvorgänge keine Relais erforderlich sind. Der Waschmotor, also der Antriebsmotor für die Wäschetrommel, wird hinsichtlich seiner Wasch- und Schleuderdrehzahlen und der diesbezüglichen jeweiligen Betriebsdauer über ein elektronisches Schaltelement (Triac) von der Steuerelektronik betrieben. Auch die Drehrichtung des Waschmotors kann über die Steuerelektronik vorgegeben werden, sie kann aber auch etwa gemäß EP 0 695 982 A1 über eine Reversiertrommel gesteuert werden. Von Nockenscheiben werden nicht nur die erwähnten Schaltkontakte betätigt, sondern auch Codierkontakte. Über diese gibt die Programmtrommel damit Befehle an die Steuerelektronik etwa darüber, wann welche Waschfunktion (Waschen oder Schleudern) mit welcher Drehzahl und gegebenenfalls Drehrichtung vom Waschmotor durchzuführen ist. Je größer die Anzahl der möglichen Waschfunktionen ist, desto größer ist herkömmlicher Weise die Anzahl der für die Auswahl benötigten Codierkontakte. Das ist wegen des apparativen Aufwands nachteilig.

Der Schaltwerkmotor, der die Programmtrommel zur Schrittfortschaltung antreibt, wird aus der Steuerelektronik derart gesteuert, dass nach einer für die jeweilige Waschfunktion vorgesehenen Zeitspanne die Programmtrommel um einen Schritt weitergeschaltet wird. In diesem Zusammenhang sind in der DE 20 40 464 C3 oder in der DE 34 00 482 A1 mechanische Mittel zur Schrittzeitdehnung beschrieben. Diese dienen dazu, an bestimmten Programmstellen festzulegen, dass die Programmtrommel nicht bei jedem Schritt des Schaltwerkmotors in den nächsten Programmschritt weitergeschaltet wird, sondern erst nach einer vorgegebenen Anzahl von Schaltschritten des Schaltwerkmotors, die als Dehnungsfaktor bezeichnet wird.

Eine allfällig erforderliche Zeitdehnung könnte auch in den Funktionsablauf der Steuerelektronik einprogrammiert sein, was aber einen erheblichen zusätzlichen Aufwand bedeuten würde, während über die codeabhängige Funktionssteuerung des jeweils erreichten Schaltschrittes gerade eine Vereinfachung des Betriebs der Steuerelektronik angestrebt wird. Der Erfindung liegt deshalb die technische Problemstellung zugrunde, die funktionalen Vorteile der für jeden Programmschritt codeabhängigen Funktionssteuerung nicht durch Zeitdehnungsbedarf wieder hinfällig zu machen.

Diese Aufgabe ist durch die Kombination der im Hauptanspruch angegebenen Merkmale gelöst. In Zusammenhang damit, dass die Programmtrommel einen Code (also gewissermaßen eine Codiernummer) an die Steuerelektronik legt, und demzufolge eine Auswahl unter mehreren möglichen Funktionen (speziell Waschfunktionen des Motors) nacheinander abarbeiten lässt, bleibt der Zeitdehnungsfaktor im mechanischen Schaltwerk programmiert, ohne dafür in die Steuerelektronik eingreifen zu müssen. Der Waschmotor führt also bei Vorliegen eines bestimmten Codes am Eingang der Steuerelektronik nacheinander verschiedene hierfür in der Steuerelektronik unter diesem Code gespeicherte Funktionen aus. Damit läßt sich die Anzahl der nötigen Kodierkontakte und die Anzahl der zum Lesen der Codes nötigen Mikroprozessoreingänge beträchtlich verringern, was zu einer Verbilligung der Programmsteuereinrichtung führt, ohne daß die Möglichkeit des Abarbeitens verschiedener Waschfunktionen beeinträchtigt wird. Es müssen nicht immer alle Waschfunktionen einer gespeicherten Waschfunktionsfolge abgearbeitet werden. Die Abarbeitung wird unterbrochen, wenn die Programmtrommel auf einen anderen Code weiterschaltet.

Da bei der beschriebenen Programmsteuereinrichtung darauf verzichtet ist, die einzelnen Waschfunktionen einzeln aus einem Speicher abrufen zu können, ist es bei der herstellerseitigen Programmierung der aufeinanderfolgenden Waschfunktionen im Speicher sachgerecht, wenn die einzelnen Waschfunktionen so gespeichert sind, daß eine nachfolgende Funktion eine waschtechnische Funktionserweiterung der ihr vorhergehenden Waschfunktion ist und/oder eine vorhergehende Waschfunktion eine waschtechnisch logische Voraussetzung der ihr nachfolgenden Waschfunktion ist. Beispielsweise ist es sinnvoll, in der Folge der Waschfunktionen zunächst Waschbewegungen und danach Schleuderbewegungen der Waschtrommel vorzusehen. Der umgekehrte Fall wäre ersichtlich waschtechnisch sinnlos.

Auf den gesamten Programmablauf gesehen, stellt die fest gespeicherte Folge von Waschfunktionen ein Unterprogramm dar, das an verschiedenen Stellen bzw. Zeitpunkten des Programmablaufs aufgerufen und ganz oder teilweise abgearbeitet werden kann.

Weitere vorteilhafte Ausgestaltungen der Erfindung ergeben sich aus den Unteransprüchen und der folgenden Beschreibung. In der Zeichnung zeigen:
Figur 1 ein Blockschaltbild einer Hybrid-Programmsteuereinrichtung einer Waschmaschine,
Figur 2 eine Teilschaltung des Blockschaltbilds zur Funktionserläuterung,
Figur 3 einen beispielsweisen Programmablauf mit der Schaltung nach Figur 2 nach dem Stand der Technik,
Figur 4 einen den Programmschritten 1 bis 5 der Figur 3 entsprechenden Programmablauf nach der Erfindung,
Figur 5 einen den Programmschritten 10, 20 der Figur 3 entsprechenden Programmablauf nach der Erfindung und
Figur 6 eine weitere erfindungsgemäße Ausführungsmöglichkeit der Programmschritte 1 bis 5 der Figur 3.

Eine Hybrid-Programmsteuereinrichtung weist ein elektromechanisches Programmschaltwerk P mit einer Programmtrommel T auf, die über ein Schaltwerkgetriebe G von einem Schaltwerkmotor TM antreibbar ist. Die Programmtrommel T trägt in üblicher Weise Nockenscheiben, durch die Schaltkontakte Ka und Kodierkontakte Kc schaltbar sind, wobei jedem der Kontakte eine eigene Nockenscheibe zugeordnet ist.

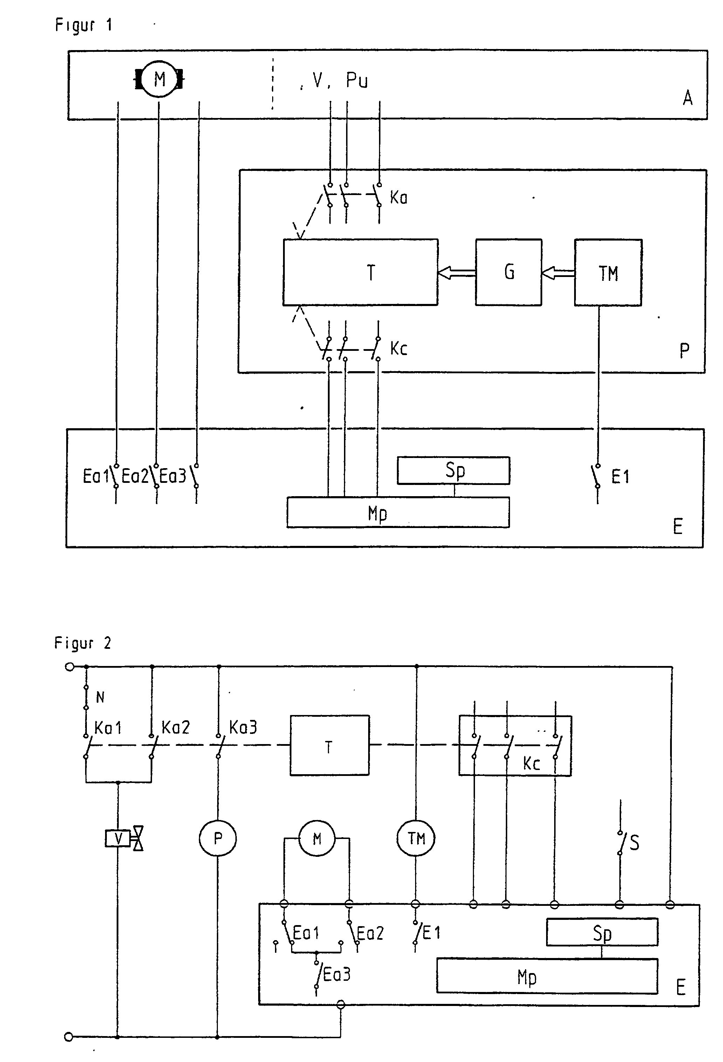

Mittels der Schaltkontakte Ka sind verschiedene der Aggregate der Waschmaschine, beispielsweise Ventile V und eine Ablaufpumpe Pu, sowie ggf. andere Aggregate schaltbar. Mittels der Kodierkontakte Kc sind Codes, d.h. Kodierbefehle, an eine Steuerelektronik E anlegbar, die einen Mikroprozessor MP und einen Speicher Sp sowie einen elektronischen Schalter E1 zur Ansteuerung des Schaltwerkmotors TM und elektronische Schalter Ea1, Ea2, Ea3, beispielsweise Triacs, zur Ansteuerung von anderen Aggregaten der Waschmaschine, beispielsweise des Waschmotors M, aufweist (Figur 1).

In Figur 2 ist eine spezielle Teilschaltung aus dem Blockschaltbild nach Figur 1 dargestellt. Das Ventil V ist entweder mittels des Schaltkontakts Ka1 oder mittels des zu diesem parallelliegenden Schaltkontakts Ka2 einschaltbar, wobei in Reihe zum Schaltkontakt Ka1 ein Niveauschalter N liegt, der öffnet, wenn der Wasserfüllstand in der Waschtrommel einen Referenzpegel überschreitet. Die Ablaufpumpe Pu wird vom Schaltkontakt Ka3 geschaltet. Nockenscheiben der Programmtrommel T schalten die Schaltkontakte Ka1, Ka2 und Ka3. Weitere Nockenscheiben der Programmtrommel T schalten die Kcdierkontakte Kc, die an die Steuerelektronik E gelegt sind. Schalter Ea1 und Ea2, die Relaiskontakte sind, schalten die Drehrichtung des Waschmotors M. Der elektronische Schalter Ea3, der beispielsweise ein Triac ist, steuert die Drehzahl des Waschmotors M. Die Schalter Ea1, Ea2 und Ea3 sind von der Steuerelektronik E gesteuert. Bei einer anderen Ausführung können anstelle der Schalter Ea1 und Ea2, die die Drehrichtung des Waschmotors M schalten, auch Schaltkontakte einer mit dem Schaltwerkmotor TM in Verbindung stehenden Reversiertrommel vorgesehen sein. Der elektronische Schalter E1 für den Schaltwerkmotor TM wird von der Steuerelektronik E betätigt.

In Figur 2 ist ein mechanischer Bedienschalter S für die Spülstopp-Funktion gezeigt. Solange dieser Bedienschalter S offen ist, wird am Ende des Programms die Waschlauge nicht abgepumpt und es wird nicht endgeschleudert. Damit besteht die Möglichkeit, empfindliches Waschgut in Waschlauge ruhen zu lassen, bevor es der Wäschetrommel zu einer beliebigen Zeit entnommen wird.

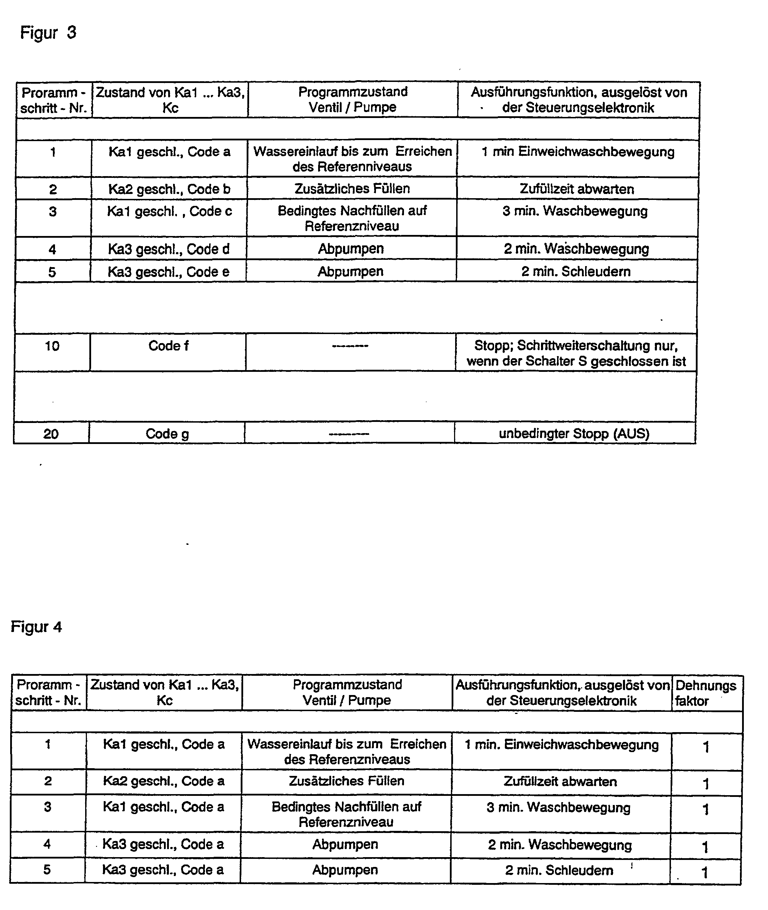

Anhand von Figur 3 wird ein Beispiel eines nach dem Stand der Technik üblichen Programmablaufs der Schaltung nach Figur 2 beispielhaft erläutert. Im Programmschritt 1 der Programmtrommel T ist der Schaltkontakt Ka1 geschlossen - hier und im folgenden sind jeweils die nicht als geschlossen genannten Schaltkontakte Ka... als geöffnet zu verstehen - und über die Kodierkontakte Kc wird der Code a an die Steuerelektronik gelegt. Infolge des geschlossenen Schaltkontakts Ka1 läuft Wasser in die Wäschetrommel, bis der Referenzpegel erreicht ist. Bei dessen Erreichen öffnet der Niveauschalter N. Im Programmschritt 1 findet infolge des von den Kodierkontakten C an die Steuerelektronik E gelegten Codes a eine einminütige Einweich-Waschbewegung durch den Waschmotor M statt.

Ist diese Minute vergangen, was die Steuerelektronik E feststellt, dann schaltet sie über den Schalter E1 den Schaltwerkmotor TM um einen Schritt weiter, so daß die Programmtrommel T in den Programmschritt 2 kommt. Im Programmschritt 2 ist der Schaltkontakt Ka2 geschlossen und der Code b liegt über die Kodierkontakte Kc an der Steuerelektronik E an. Durch das Schließen des Schaltkontakts Ka2 wird weiter Wasser in die Waschtrommel eingelassen und zwar für eine durch die Steuerelektronik E aufgrund des Codes b definierte Zufüllzeit bei stillstehender Wäschetrommel. Ist die Zufüllzeit abgelaufen, dann schaltet die Steuerelektronik E in den Programmschritt 3.

In diesem dritten Programmschritt ist wieder der Schaltkontakt Ka1 geschlossen und der Code c an die Steuerelektronik E gelegt. Durch das erneute Schließen des Schaltkontakts Ka1 findet ein bedingtes Nachfüllen von Wasser in die Wäschetrommel statt, wenn das Wasserniveau unter den Referenzpegel gesunkten sein sollte, was beispielsweise der Fall sein kann, wenn das Waschgut viel Wasser in sich aufgesaugt haben sollte. Gleichzeitig erfolgt durch den Code c eine dreiminütige Waschbewegung des Waschmotors M, bei der - wie auch bei der im Programmschritt 1 erfolgenden Einweich-Waschbewegung - die Drehrichtung gewechselt werden kann und die Drehzahl anders als bei der Einweich-Waschbewegung sein kann.

Nach Ablauf der dreiminütigen Waschbewegung wird von der Steuerelektronik E wieder der Schalter E1 geschlossen, so daß die Programmtrommel T in den Programmschritt 4 weiterschaltet. Im Programmschritt 4 ist der Schaltkontakt Ka3 von der Programmtrommel T geschlossen, und von ihr ist über die Kodierkontakte Kc der Code d eingestellt . Infolge des geschlossenen Schaltkontakts Ka3 pumpt die Ablaufpumpe Pu Waschlauge ab, wobei infolge des Codes d die Steuerelektronik E den Waschmotor M in eine zweiminütige Waschbewegung versetzt.

Nach dieser zweiminütigen Waschbewegung, während der Waschlauge abgepumpt wird, wird die Programmtrommel T über den Schaltwerkmotor TM in den fünften Programmschritt gebracht. In diesem bleibt der Schaltkontakt Ka3 geschlossen. Es wird jedoch für die Kodierkontakte Kc der Code e eingestellt. Es erfolgt also weiter ein Abpumpen und aufgrund des Codes e erfolgt ein zweiminütiges Schleudern, d.h. Erhöhen der Waschtrommeldrehzahl ohne Reversierung.

Nach ggf. weiteren Programmschritten tritt beispielsweise ein Programmschritt 10 auf, in dem die Kodierkontakte Kc der Code f an die Steuerelektronik E legen. Die Schaltkontakte Ka... sind dabei geöffnet. Infolge des Codes f stoppt der Waschmotor M, und eine Weiterschaltung in den nächsten Programmschritt kann nur erfolgen, wenn der Schalter S geschlossen ist bzw. wird. Diese Stellung ist eine bedingte Stoppstellung, bei der das vollständige Programm noch nicht abgeschlossen ist und die Wäsche noch nicht aus der Waschtrommel entnommen werden kann. Aus dem Programmschritt 10 kann die Programmtrommel T erst in den Programmschritt 20 weitergeschaltet werden, wenn der Schalter S geschlossen wird.

Im nächstfolgenden Programmschritt 20 wird über den Code g ein unbedingter Stopp von der Steuerelektronik E geschaltet, nach dem weder der Waschmotor M noch der Schaltwerkmotor TM eingeschaltet werden kann. Die Waschmaschine ist damit vollständig abgeschaltet, so daß sie vom Benutzer erst bei erneutem Einstellen der Programmtrommel T wieder in Betrieb genommen werden kann.

Die Numerierung der Programmschritte 1 bis 5, 10, 20 bedeutet hier und im folgenden nicht, daß notwendigerweise zwischen "5" und "10" vier weitere Programmschritte und zwischen "10" und "20" neun weitere Programmschritte liegen. Die Zahlen sind nur der Erläuterung dienende Beispiele.

Wie die obigen Ausführungen anhand der von Figur 3 beschriebenen Funktionen zeigen, sind nach dem Stand der Technik Codes a bis g, also sieben Kodiermöglichkeiten nötig. Durch die Erfindung wird diese Anzahl der notwendigen Kodiermöglichkeiten zur Durchführung der genannten Funktionen erheblich reduziert. Anhand der Figur 4 wird erläutert, wie die fünf unterschiedlichen Codes a bis e durch einen einzigen Code a ersetzt werden können.

In dem Speicher Sp der Steuerelektronik E ist im Beispielsfalle die Folge der fünf Waschfunktionen derart gespeichert, daß sie auf einen einzelnen Code hin automatisch nacheinander ablaufen. Es ist also im Speicher Sp festgelegt, daß als Waschfunktionen nacheinander eine einminütige Waschbewegung, eine definierte Zufüllzeit (Stillstand des Waschmotors), eine dreiminütige Waschbewegung, eine zweiminütige Waschbewegung und ein zweiminütiges Schleudern erfolgen soll. Immer wenn der Code a von den Kodierkontakten Kc aufgerufen wird, beginnt diese Folge von Waschfunktionen neu, wenn davor ein anderer Code von den Kodierkontakten aufgerufen war. Der hierfür nötige Speicherplatz ist meist ohnehin vorhanden und ist jedenfalls ein wesentlich kleinerer Aufwand, als eine Vielzahl von Kodierungskontakten.

Der Vergleich der Figur 3 und 4 zeigt, daß in beiden Fällen in den Programmschritten 1 bis 5 die Schaltkontakte Ka1, Ka2, Ka3 gleicherweise geschlossen sind. Im Gegensatz zu Figur 3 liegt nach Figur 4 jedoch in den Programmschritten 1 bis 5 über einen Kodierkontakt bzw. über die Kodierkontakte Kc immer der gleiche Code an der Steuerelektronik E an. Da unter dissem Code im Beispielsfall die beschriebene Folge von Waschfunktionen abgelegt ist, werden diese Waschfunktionen in den Programmschritten 1 bis 5 aufeinanderfolgend ausgeführt.

Ist die Waschfunktion des ersten Programmschritts (1 min. Einweichwaschbewegung) erledigt, dann schaltet die Steuerelektronik E die Programmtrommel T in den zweiten Programmschritt. Auch in diesem ist von der Programmtrommel T der Code a an die Steuerelektronik E gelegt. Nun wird aus dem Speicher Sp die nächste Waschfunktion (Motorstillstand bis definierte Zufüllzeit verstrichen) abgerufen. Danach schaltet die Steuerelektronik E die Programmtrommel T in den dritten Programmschritt, in dem die dritte Waschfunktion (3 min. Waschbewegung) durchgeführt wird, wonach in den vierten Programmschritt weitergeschaltet wird, in dem unter dem gleichen Code a dann aus dem Speicher Sp die zweiminütige Waschbewegung bei Abpumpen infolge des geschlossenen Schaltkontakts Ka3 abgerufen wird. Danach schaltet die Steuerelektronik E die Programmtrommel T in den fünften Programmschritt, in dem bei weiterem Abpumpen bei weiter anstehendem Code a aus dem Speicher Sp die nächste Waschfunktion (2 min. Schleudern) abgerufen wird. Danach wird dann die Programmtrommel T wiederum weitergeschaltet, wobei ggf. andere Schaltkontakte Ka schließen und ein anderer Code eingestellt wird.

Wiederholt sich im weiteren Programmablauf der Code a, dann wird wieder die unter diesem Code gespeicherte Folge von Waschfunktionen zur Abarbeitung ausgewählt. Die Waschfunktionsfolge ist also ein Unterprogramm des gesamten Programmablaufs, das an beliebigen Stellen des Programms wiederholt werden kann.

Das Abarbeiten der Folge von Waschfunktionen läßt sich dadurch abbrechen, daß ein anderer Code von der Programmtrommel T geschaltet wird. Werden beispielsweise die die Kodierkontakte Kc schaltenden Nockenscheiben so gestaltet, daß der Code a nicht während fünf aufeinanderfolgenden Programmschritten - wie oben angenommen - , sondern beispielsweise nur während vier aufeinanderfolgenden Programmschritten geschaltet wird, dann würde die Waschfunktion des fünften Programmschritts nicht aus dem Speicher Sp abgerufen und durchgeführt. Ersichtlich läßt sich somit die Abarbeitung der gespeicherten Folge von Waschfunktionen nach jedem Programmschritt unterbrechen. Dies erweitert die Programmgestaltungsmöglichkeiten zusätzlich, weil im Programmablauf nicht immer alle unter einem Code gespeicherten Waschfunktionen abgearbeitet werden müssen.

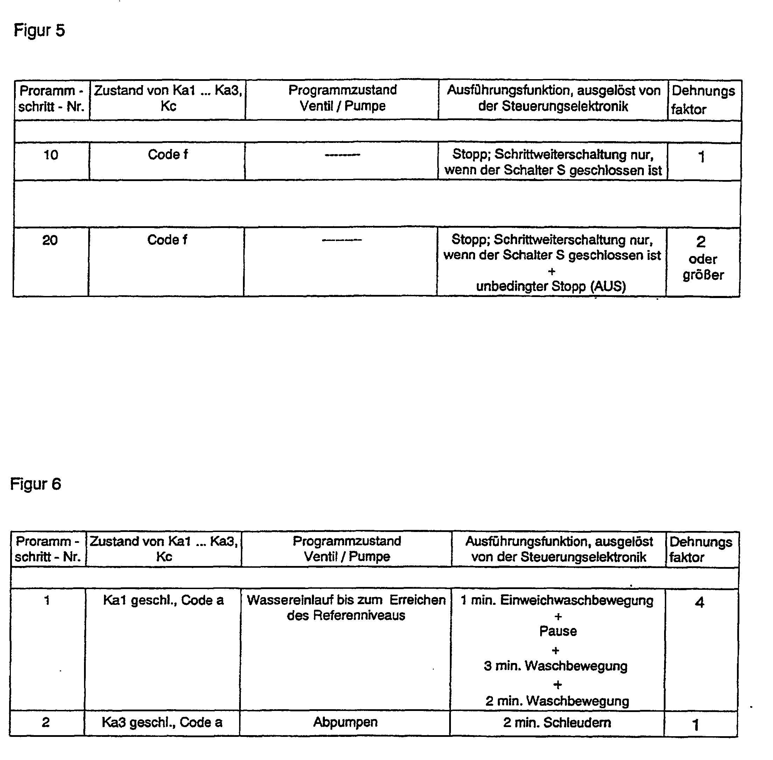

Die Waschfunktionen in der gespeicherten Waschfunktionsfolge sind so ausgewählt, daß ihre Abfolge waschtechnisch zweckmäßig ist, weil nicht vorgesehen ist, einzelne Waschfunktionen - außer der Waschfunktion des ersten Programmschritts - einzeln aus dem Speicher Sp abrufbar zu machen. Die anhand der Figuren 3 und 4 beschriebenen Folge von Waschfunktionen ist waschtechnisch sinnvoll, weil während des Wassereinlaufs eine Einweichwaschbewegung und während des bedingten Nachfüllens und des Abpumpens eine Waschbewegung und danach beim Abpumpen ein Schleudern stattfindet. Waschtechnisch sinnvoll sind auch die Programmabläufe nach den Figuren 5 und 6, weil auch dort eine zweckmäßige Folge von Waschfunktionen angegeben ist.

Es ist darauf hinzuweisen, daß "Waschfunktionen" im Sinne der Erfindung alle Funktionen einer Maschine, insbesondere Waschmaschine, sein können und somit auch solche Funktionen, die nicht ausschließlich die Ansteuerung des Waschmotors M betreffen. Ein Beispiel hierfür ergibt sich aus Figur 5. Figur 6 zeigt ein Beispiel, bei dem nur während des Schleudern abgepumpt wird. Selbstverständlich sind auch andere Folgen von Waschfunktionen bzw. Maschinenfunktionen in dem Speicher Sp, ggf. unter einen anderen Code, ablegbar.

In der rechten Spalte der Figur 4 ist als Dehnungsfaktor bei jedem Programmschritt "1" angegeben. Dies bedeutet, daß - wie oben beschrieben - die Programmtrommel T vom Schaltwerkmotor TM immer dann in den nächsten Programmschritt weitergeschaltet wird, wenn der Schaltwerkmotor TM von der Steuerelektronik E zur Schaltung um einen Schritt angesteuert wird. Der Zeitdehnungsfaktor ist also "1".

In Figur 5 ist als zweites Beispiel gezeigt, daß sich auch die oben anhand von Figur 3 beschriebenen Programmschritte 10 und 20 mit nur einem Code durchführen lassen. Im Speicher Sp ist unter dem Code f als Folge von Waschfunktionen abgelegt: Stopp des Waschmotors, Ausschalten der gesamten Programmsteuereinrichtung.

Der Stopp des Waschmotors M (bedingter Stopp) ist für den Fall vorgesehen, daß die Wäsche bei stillstehender Wäschetrommel in der Waschlauge liegen bleiben soll, bis vom Benutzer der Schalter S geschlossen wird. Erst nach dem Schließen des Schalters S schaltet die Steuerelektronik E die Programmtrommel T um einen Programmschritt weiter und es findet ein Abpumpen und ggf. ein Endschleudern statt.

Durch die Ausschaltfunktion (Programmende, unbedingter Stopp) wird danach auch der Schaltwerkmotor TM derart abgeschaltet, daß die Waschmaschine erst wieder durch einen erneuten Programmstart in Betrieb genommen werden kann.

In diesem Fall (vgl. Fig.5) ist ein mechanisches Schrittzeitdehnungsmittel vorgesehen, wie es beispielsweise in der DE 20 40 464 C3 oder in der DE 34 00 482 A1 beschrieben ist. Durch solche Mittel wird bei einer bestimmten Stellung der Programmtrommel T diese erst dann um einen Programmschritt weitergeschaltet, wenn der Schaltwerkmotor TM um zwei oder mehrere Schritte von der Steuerelektronik E weitergeschaltet wurde. Hierfür werden im Programmschaltwerk P Zeitdehnungsringe oder Zeitdehnungsschwingen verwendet.

Beim Auftreten des Codes f (vgl. Fig.5) im Programmschritt 10 wird zunächst der Waschmotor M abgeschaltet und es erfolgt auf unbestimmte Zeit keine Ansteuerung des Schaltwerkmotors TM. Erst wenn der Schalter S geschlossen wird, wird von der Steuerelektronik E über den Schaltwerkmotor TM die Programmtrommel T um einen Programmschritt weitergeschaltet. Die den Schaltwerkmotor TM und die Programmtrommel T koppelnde Zeitdehnungseinrichtung befindet sich in diesem Fall in der Stellung "Dehnungsfaktor 1". Es werden danach weitere Programmschritte, beispielsweise Abpumpen, Endschleudern, durchgeführt.

Tritt dann im Programmschritt 20 wieder der Code f auf, dann hat die Programmtrommel T auf einen Zeitdehnungsfaktor von 2 oder größer umgeschaltet. Dies hat zur Folge, daß nun erstens wieder der Waschmotor gestoppt wird und zweitens die Programmtrommel T vom Schaltwerkmotor TM unabhängig vom Zustand des Schalters S nicht mehr weitergeschaltet werden kann. Die Maschine kann erst nach einer neuen Programmeingabe wieder gestartet werden.

Es ist also ersichtlich, daß durch die von der Programmtrommel T ausgelöste programmschrittbezogene Festlegung des Zeitdehnungsfaktors entschieden wird, ob durch die Kodierung f der bedingte Stopp allein oder verbunden mit dem unbedingten Stopp ausgeführt wird.

Aus Sicherheitsgründen ist es sinnvoll, für die Ausschaltfunktion (unbedingter Stopp) den Zeitdehnungsfaktor auf "unendlich" einzustellen, was durch Weglassen eines Antriebszahns eines entsprechenden Zeitdehnungsrings an der betreffenden Stelle erfolgen kann. Dadurch ist sichergestellt, daß die Programmtrommel T auch in einem Fehlerfall nicht über die Aus-Position hinwegtransportiert wird.

Anhand von Figur 6 wird ein weiteres Ausführungsbeispiel beschrieben. Bei dem Programmablauf nach Figur 6 ist davon ausgegangen, daß - anders als beim Programmablauf nach Figur 4 - der Schaltkontakt Ka2 (vgl. in Fig.4 den zweiten Programmschritt) nicht geschlossen werden muß, also ein zusätzliches Wassernachfüllen nicht vorgesehen ist, und daß der Schaltkontakt Ka3 für das Abpumpen nur während des Schleuderns geschlossen sein muß.

Im Speicher Sp ist wieder unter dem Code a die zu Figur 4 genannte Folge der fünf Waschfunkti onen, nämlich 1 min. Einweichwaschbewegung, Waschmotorstopp, 3 min. Waschbewegung, 2 min. Waschbewegung, 2 min. Schleudern, abgelegt. Beim Ausführungsbeispiel nach Figur 6 ist eine programmschrittspezifische, an sich bekannte Zeitdehnung in folgender Weise ausgenutzt:

Im ersten Programmschritt ist der Schaltkontakt Ka1 geschlossen, so daß ein Wassereinlauf bis zum Erreichen des Referenzniveaus (öffnen des Schalters N) erfolgt. Im zweiten Programmschritt wird der Schaltkontakt Ka3 geschlossen, um ein Abpumpen durchzuführen. Hierfür ist eine Weiterschaltung der Programmtrommel T nur um einen Programmschritt nötig.

Während des ersten und des zweiten Programmschritts ist der Code a von der Programmtrommel T über dessen bzw. deren Kodierkontakt/e Kc an die Steuerelektronik E gelegt. Dies veranlaßt, daß im ersten Programmschritt nacheinander die einminütige Einweichwaschbewegung, ein Waschmotorstopp (Pause, entsprechend der Zufüllzeit in Fig.4), eine dreiminütige Waschbewegung und eine zweiminütige Waschbewegung (also fünfminütige Waschbewegung) ausgeführt wird. Da nach Abarbeitung jeder dieser vier einzelnen Waschfunktionen der Schaltwerkmotor TM von der Steuerelektronik E angesteuert wird, jedoch diese vier Waschfunktionen während eines einzigen Programmschritts der Programmtrommel durchgeführt werden sollen, ist hier die genannte Zeitdehnung vorgesehen und zwar mit einem den vier Waschfunktionen entsprechenden Zeitdehnungsfaktor 4. Dies hat zur Folge, daß die Programmtrommel erst nach vier Schritten des Schaltwerkmotors TM vom ersten Programmschritt in den zweiten Programmschritt weitergeschaltet wird.

Nach dem vierten Ansteuern des Schaltwerkmotors TM schaltet die Programmtrommel T in den zweiten Programmschritt, in dem der Schaltkontakt Ka3 geschlossen wird, wodurch ein Abpumpen erfolgt. Da auch in diesem zweiten Programmschritt der Code a an der Steuerelektronik E anliegt, wird nun die fünfte Waschfunktion (2 min. Schleudern) des Speichers Sp ausgeführt. Danach wird die Programmtrommel T mit dem Zeitdehnungsfaktor 1 weitertransportiert. Bei dieser Ausführung ist es also möglich, die genannten fünf Waschfunktionen in nur zwei Programmschritten der Programmtrommel T unterzubringen.

Durch mechanische Mittel der Zeitdehnung kann also der Ablauf des Waschprogramms beeinflußt werden, ohne daß die Anzahl der Kodierungsmöglichkeiten erhöht werden muß.

Aus der vorhergehenden Beschreibung ergibt sich, daß mit einer geringen Anzahl von Kodierkontakten bzw. Kodiermöglichkeiten eine weite Variation von herstellerseitigen Programmgestaltungen möglich ist. Die Funktionsweise der beschriebenen Ausführungsbeispiele läßt sich ohne weiteres auch auf andere zweckmäßige Folgen von Unterfunktionen einer Hybrid-Programmsteuereinrichtung übertragen.

## Patentansprüche

1. Hybrid-Programmsteuereinrichtung für eine Maschine, insbesondere für eine Waschmaschine, mit einem elektromechanischen Programmschaltwerk (P), das wenigstens eine Programmtrommel (T) aufweist, und mit einer Steuerelektronik (E), wobei die Programmtrommel (T) über von ihr gesteuerte Kodierkontakte (Kc) programmschrittspezifische Codes (a, b, ...) an die Steuerelektronik (E) legt, wodurch diese eine Funktion (insbesondere eine Waschfunktion) eines der Aggregate (insbesondere des Motors) der Maschine steuert, und wobei die Steuerelektronik (E) einen Schaltwerkmotor (TM) zum Programmschrittantrieb der Programmtrommel (T) steuert, indem zu wenigstens einem Code (a, b, ...) in einem Speicher (SP) der Steuerelektronik (E) eine feste Folge von mehreren Funktion abgelegt ist und beim Aufruf dieses Codes (a, b, ...) die Steuerelektronik (E) die Funktionen der ihm zugeordneten Folge nacheinander ansteuert, wodurch beim Anlegen desselben Codes (a, b, ...) über mehrere Programmschritte hinweg die Funktionen der gespeicherten Folge in den aufeinanderfolgenden Programmschritten ausgeführt werden und in den einzelnen Programmschritten von Schaltkontakten (Ka) des Programmschaltwerkes (P) direkt angesteuerte Aggregate (V, Pu) in verschiedene Schaltzustände bringbar sind,
**dadurch gekennzeichnet,**
**dass** zwischen den einzelnen Funktionen der gespeicherten Folge die Steuerelektronik (E) den Schaltwerkmotor (TM) ansteuert und dieser, wenn keine Zeitdehnung eingestellt ist, die Programmtrommel (T) jeweils gleich in den nächsten Programmschritt bringt, jedoch dann, wenn eine Zeitdehnung eingestellt ist, die Programmtrommel (T) erst nach Abarbeiten einer dem Zeitdehnungsfaktor entsprechenden Anzahl von Funktionen in den nächsten Programmschritt bringt.

2. Programmsteuereinrichtung nach Anspruch 1,
**dadurch gekennzeichnet,**
**daß** die Anzahl der im jeweiligen Programmschritt ausgeführten Funktionen der Folge von einem programmschrittspezifischen Zeitdehnungsfaktor des Programmschaltwerks(P) abhängt.

3. Programmsteuereinrichtung nach Anspruch 1 oder 2,
**dadurch gekennzeichnet,**
**daß** die Ausführung der Folge der Funktionen durch Weiterschalten der Programmtrommel(T) auf eine andere Kodiernummer unterbrechbar ist.

4. Programmsteuereinrichtung nach einem der vorhergehenden Ansprüche,
**dadurch gekennzeichnet,**
**daß** ein Zeitdehnungsfaktor "unendlich" einstellbar ist, bei dessen Auftreten die Programmtrommel(T) nicht mehr weitergeschaltet wird und die Programmsteuereinrichtung abgeschaltet wird.

5. Programmsteuereinrichtung nach einem der vorhergehenden Ansprüche,
**dadurch gekennzeichnet,**
**daß** die einzelnen Waschfunktionen der Folge so gespeichert sind, daß eine nachfolgende Waschfunktion eine waschtechnische Funktionserweiterung der ihr vorhergehenden Waschfunktion ist.

6. Programmsteuereinrichtung nach einem der vorhergehenden Ansprüche,
**dadurch gekennzeichnet,**
**daß** die einzelnen Waschfunktionen der Folge so gespeichert sind, daß eine vorhergehende Waschfunktion eine waschtechnisch logische Voraussetzung der ihr nachfolgenden Waschfunktion ist.

## Claims

1. Hybrid programmed control device for a machine, in particular for a washing machine, with an electromechanical cycle control timer (P), which displays at least one program drum (T), and with control electronics (E), where the program drum (T) by means of coding contacts (Kc) controlled by it sends program step-specific codes (a, b, etc.) to the control electronics (E), as the result of which said control electronics controls a function (in particular a wash function) of one of the aggregates (in particular of the motor) of the machine, and where the control electronics (E) controls a drum motor (TM) to drive the program step of the program drum (T), in that for at least one code (a, b, etc.) a fixed sequence of several functions is stored in a memory (SP) of the control electronics (E) and when this code (a, b, etc.) is invoked the control electronics (E) starts the functions in the sequence assigned thereto, as the result of which by storing the same code (a, b, etc.) over several program steps the functions of the stored sequence are executed in the consecutive program steps and in the individual program steps aggregates (V, Pu) directly driven by the cycle control timer (P) by means of switch contacts (Ka) can be brought into various switch statuses,
**characterised in that**
between the individual functions of the stored sequences, the control electronics (E) drives the drum motor (TM) and this latter, when no extended time scale has been set, brings the program drum (T) in each case immediately into the next program step, but when an extended time scale is set, only brings the program drum (T) into the next program step after carrying out a number of functions corresponding to the extended time factor.

2. Programmed control device according to claim 1,
**characterised in that**,
the number of functions executed in the respective program step depends on the sequence of a program step-specific extended time factor of the cycle control timer (P).

3. Programmed control device according to claim 1 or 2,
**characterised in that**,
the execution of the sequence of functions can be interrupted by advancing the program drum (T) to a different coding number.

4. Programmed control device according to one ofthe preceding claims,
**characterised in that**,
an extended time scale can be "infinitely" adjusted, and when this occurs the program drum (T) is no longer advanced and the programmed control device is switched off.

5. Programmed control device according to one of the preceding claims,
**characterised in that**,
the individual wash functions of the sequence are stored such that a subsequent wash function is a technical extension of the washing function preceding it.

6. Programmed control device according to one of the preceding claims,
**characterised in that**,
the individual wash functions of the sequence are stored such that a preceding wash function is a technical logical precondition for the subsequent wash function.

## Revendications

1. Dispositif hybride de commande de programme pour une machine, en particulier une machine à laver, comportant un programmateur électromécanique (P) qui comporte au moins un tambour de programmation (T), et comportant une électronique de commande (E), le tambour de programmation (T) appliquant à l'électronique de commande (E) des codes (a, b, ...) spécifiques des pas du programme, par l'intermédiaire de contacts de codage (Kc) commandés par le tambour de programmation, ce qui fait que cette électronique de commande commande une fonction (en particulier une fonction de lavage) de l'un des ensembles (en particulier du moteur) de la machine, et l'électronique de commande (E) commandant un moteur de programmateur (TM) pour l'entraînement des pas du programme du tambour de programmation (T), par le fait que pour au moins un code (a, b, ...) est enregistrée dans une mémoire (SP) de l'électronique de commande (E), une succession fixe de plusieurs fonctions, et à l'appel de ce code (a, b, ...) l'électronique de commande (E) commande l'une après l'autre les fonctions de la succession qui lui sont associées, ce qui fait que lors de l'application du même code (a, b, ...) sur plusieurs pas de programme, les fonctions de la succession mémorisée sont exécutées dans les pas de programmes successifs, et que dans les différents pas de programme, des ensembles (V, Pu) directement commandés par des contacts de couplage (Ka) du programmateur (P) peuvent être amenés dans différents états de couplage, **caractérisé en ce qu'**entre les différentes fonctions de la succession mémorisée, l'électronique de commande (E) commande le moteur du programmateur (TM), et, lorsqu'aucun ralentissement n'est pris, celui-ci amène le tambour de programmation (T) chaque fois aussitôt dans le pas de programme suivant, mais, lorsqu'un ralentissement est pris, il n'amène le tambour de programmation (T) dans le pas de programme suivant qu'après exécution d'un nombre de fonctions correspondant au facteur de ralentissement.

2. Dispositif de commande de programme selon la revendication 1, **caractérisé en ce que** le nombre de fonctions de la succession, exécutées dans le pas de programme considéré, dépend d'un facteur de ralentissement spécifique du pas de programme du programmateur (P).

3. Dispositif de commande de programme selon la revendication 1 ou 2, **caractérisé en ce que** l'exécution de la succession des fonctions peut être interrompue par passage du tambour de programmation (T) sur un autre numéro de code.

4. Dispositif de commande de programme selon l'une des revendications précédentes, **caractérisé en ce qu'**on peut régler de manière "infinie" un facteur de ralentissement à l'apparition duquel le tambour de programmation (T) n'avance plus et le dispositif de commande de programme est mis à l'arrêt.

5. Dispositif de commande de programme selon l'une des revendications précédentes, **caractérisé en ce que** les différentes fonctions de lavage de la succession sont mémorisées de manière qu'une fonction de lavage suivante soit une extension sur le plan de la technique de lavage de la fonction de lavage qui la précède.

6. Dispositif de commande de programme selon l'une des revendications précédentes, **caractérisé en ce que** les différentes fonctions de lavage de la succession sont mémorisées de manière qu'une fonction de lavage précédente soit une condition préalable logique sur le plan de la technique de lavage à la fonction de lavage qui lui succède.
